# EUROPEAN PATENT APPLICATION

(11) **EP 1 767 695 A1**
(43) Date of publication of application: **28.03.2007**
(21) Application number: 05753371.3
(22) Date of filing: 22.06.2005
(51) Int. Cl.: D21H 27/00, B32B 3/02, B42D 15/02, B65D 5/54, B65D 27/14

(54) **PAPER PRODUCT PERMITTING SEPARATION OF SURFACE LAYER OF PAPER**

(30) Priority: 23.06.2004 JP 2004184329
(71) Applicant: Oki, Kazuhiro, Yokohama-shi, Kanagawa 227-0038 (JP); Satou, Misako, Machida-shi, Tokyo 194-0012 (JP)
(72) Inventor: OKI, Kazuhiro, Yokohama-shi, Kanagawa 227-0038 (JP); SATOU, Misako, Tokyo, 1940012 (JP); OKI, Hideaki, Kanagawa, 2270038 (JP); YANO, Seisyu, Tokyo, 1020083 (JP)
(74) Representative: Zimmermann, Gerd Heinrich
(86) International application number: PCT/JP2005/011461
(87) International publication number: WO 2006/001311

(57) **Abstract**

A paper product in accordance with the present invention is made of a single paper comprising a substrate layer, and a material layer formed on the substrate layer. The material layer is ply-separatable from the substrate layer, and has an extending area which extends outwardly beyond the substrate layer when viewed from above.

## Description

### FIELD OF THE INVENTION

The invention relates to a paper product made of a single paper comprising a plurality of layers, in which an outermost layer is ply-separatable.

### PRIOR ART

An example of a container made of a paper is disclosed in Japanese Patent Application Publication No. 7-257559.

The disclosed paper container is comprised of a main body and a cover, in which the cover is partially adhered to the main body in an adhesive area to hermetically seal the main body. The adhesive area is formed in a half-cut area. Herein, a half-cut area is defined as an area in which a cut line is formed throughout almost half of an entire thickness of a paper. In the half-cut area, paper layers are separated from one another to open the container. The half-cut area is formed also in the main body. A reinforcement is formed at an inner surface of the cover in alignment with the half-cut area in order to prevent ply-separation among paper layers of the cover.

That is, in the paper container disclosed in Japanese Patent Application Publication No. 7-257559, ply-separation starts at a cut formed at the paper. Specifically, ply-separation starts at a fiber layer of the paper.

In the postcard disclosed in Japanese Patent Application Publication No. 2000-318357, an adhesive layer re-separatable even after adhered to a substrate is formed on the substrate in order to cause the substrate to ply-separate from the adhesive layer.
Patent reference 1: Japanese Patent Application Publication No. 7-257559
Patent reference 2: Japanese Patent Application Publication No. 2000-318357

### DISCLOSURE OF THE INVENTION

### PROBLEMS TO BE SOLVED BY THE INVENTION

The above-mentioned paper container and postcard were necessary to include an adhesive layer or resin film layer on a substrate composed of a paper layer.

Accordingly, the formation of such an adhesive layer and a resin film layer takes high costs, and needs long-time and complex steps.

Furthermore, if ply-separation starts at a fiber layer of the paper as disclosed in Japanese Patent Application Publication No. 7-257559, the ply-separation occurs only in a limited area, resulting in that the paper container can be used only in limited uses.

In view of the above-mentioned problems in the prior art, it is an object of the present invention to provide a paper product which is not necessary to include a layer formed at high costs and in complex steps, such as an adhesive layer and a resin film layer, and further which causes ply-separation in non-limited areas.

### SOLUTION TO THE PROBLEMS

In order to achieve the above-mentioned object, the present invention provides a paper product made of a single paper including a substrate layer, and a material layer formed on the substrate layer, wherein the material layer is ply-separatable from the substrate layer, and the material layer has an extending area which extends outwardly beyond the substrate layer when viewed from above.

The present invention further provides a paper product made of a single paper including a substrate layer, and a material layer formed on the substrate layer, wherein the material layer is ply-separatable from the substrate layer, the material layer has an extending area which extends outwardly beyond the substrate layer when viewed from above, the material layer has a cut line formed throughout an entire thickness thereof, and a closed area defined by the cut line is separated by ply-separation.

It is preferable that the closed area defined by the cut line includes at least a part of an outer edge of the extending area.

It is preferable that the closed area defined by the cut line is formed on the substrate layer.

The paper product may further include a seal adhered across inside and outside of the closed area defined by the cut line, in which case, an adhesive force between the seal and the material layer is greater than an adhesive force between the substrate layer and the material layer.

It is preferable that a separation area in which the substrate layer and the material layer are ply-separated from each other is formed in the closed area defined by the cut line.

For instance, the above-mentioned paper product may be used as a postcard.

The present invention further provides a container including a main body in which an object is contained, and a cover capable of opening and closing relative to the main body, wherein the container is made of a single paper including a substrate layer, and a material layer formed on the substrate layer, the material layer is ply-separatable from the substrate layer, an adhesive is coated on the cover for adhering the main body and the cover to each other, a cut line is formed throughout an entire thickness of the material layer in an area around an area in which the adhesive is coated, and when the cover is peeled off the main body, an area defined by the cut line is ply-separated.

The present invention further provides a container including a main body in which an object is contained, and a cover capable of opening and closing relative to the main body, wherein the container is made of a single paper including a substrate layer, and a material layer formed on the substrate layer, the material layer is ply-separatable from the substrate layer, an adhesive is coated on the cover on the substrate layer for adhering the main body and the cover to each other, a cut line is formed in the cover throughout both an entire thickness of the material layer and a part of a thickness of the substrate layer in an area in which the adhesive is coated, and when the cover is peeled off the main body, an area defined by the cut line is ply-separated.

For instance, the container is in the form of an envelope.

The present invention further provides a container including a main body in which an object is contained, and a cover capable of opening and closing relative to the main body, and composed of a material which can be cut, wherein the container is made of a single paper including a substrate layer, and a material layer formed on the substrate layer, the material layer is ply-separatable from the substrate layer, and a cut line is formed adjacent to and along a boundary line between the main body and the cover, the cut line being formed throughout an entire thickness of the material layer.

It is preferable that the cut line is formed at opposite sides about the boundary line.

The present invention further provides a container including a main body in which an object is contained, and a cover capable of opening and closing relative to the main body, and composed of a material which can be cut, wherein the container is made of a single paper including a substrate layer, and a material layer formed on the substrate layer, the material layer is ply-separatable from the substrate layer, the container includes a pair of separation lines parallel to each other for cutting the container along a desired line, and a cut line formed outside of at least one of the separation lines along and in adjacent to the separation lines, and the cut line is formed throughout an entire thickness of the material layer.

### ADVANTAGES PROVIDED BY THE INVENTION

In the present invention, ply-separation unique to a paper is utilized for separating or peeling a surface layer of a paper. It was conventionally necessary to form an adhesive layer or a resin film layer on a substrate at high costs, but the present invention makes it no longer necessary to do so.

The conventional method in which the ply-separation starts at a fiber layer of a paper is accompanied with a problem of a limited area in which the ply-separation occurs. The present invention provides a non-limited area for ply-separation. The present invention makes it possible to separate a surface layer of a paper in a desired area. Accordingly, it is possible to increase an area to be printed in a paper product.

### BRIEF DESCRIPTION OF THE DRAWINGS

[FIG. 1] FIG. 1(A) is a plan view of a paper product in accordance with the first embodiment of the present invention, and FIG. 1(B) is a cross-sectional view taken along the line A-A in FIG. 1(A).
[FIG. 2] FIG. 2(A) is a plan view of a paper product in accordance with the second embodiment of the present invention, and FIG. 2(B) is a cross-sectional view taken along the line B-B in FIG. 2(A).
[FIG. 3] FIG. 3(A) is a plan view of a paper product in accordance with the third embodiment of the present invention, and FIG. 3(B) is a cross-sectional view taken along the line C-C in FIG. 3(A).
[FIG. 4] FIG. 4(A) is a plan view of a paper product in accordance with the fourth embodiment of the present invention, and FIG. 4(B) is a cross-sectional view taken along the line D-D in FIG. 4(A).
[FIG. 5] FIG. 5(A) is a plan view of a paper product in accordance with the fifth embodiment of the present invention, and FIG. 5(B) is a cross-sectional view taken along the line E-E in FIG. 5(A).
[FIG. 6] FIG. 6(A) is a plan view of a paper product in accordance with the sixth embodiment of the present invention, FIG. 6(B) is a cross-sectional view taken along the line F-F in FIG. 6(A), and FIG. 6(C) is a cross-sectional view taken along the line G-G in FIG. 6(A).
[FIG. 7] FIG. 7 is a plan view of a paper product in accordance with the seventh embodiment of the present invention.
[FIG. 8] FIG. 8 is a plan view of a paper product in accordance with the eighth embodiment of the present invention.
[FIG. 9] FIG. 9(A) is a plan view of a paper product in accordance with the ninth embodiment of the present invention, and FIG. 9(B) is a cross-sectional view taken along the line H-H in FIG. 9(A).
[FIG. 10] FIG. 10 is a perspective view of a paper product in accordance with the tenth embodiment of the present invention.
[FIG. 11] FIG. 11 is a perspective view of a paper product in accordance with a variant of the tenth embodiment of the present invention.

### INDICATION BY REFERENCE NUMERALS

- 100: Paper product in accordance with the first embodiment
- 101: Substrate layer
- 102: Material layer
- 103,: 103A Extending area
- 200: Paper product in accordance with the second embodiment
- 201: Cut line
- 300: Paper product in accordance with the third embodiment
- 301: Separation area
- 400: Paper product in accordance with the fourth embodiment
- 401: Separation area
- 402: Seal for separation
- 500: Paper product in accordance with the fifth embodiment
- 501: Cut line
- 502: Cut area
- 510: Stamp
- 600: Paper product in accordance with the sixth embodiment
- 601: Cut line
- 602: Cut area
- 700: Paper product in accordance with the seventh embodiment
- 701: Main body
- 702: Cover
- 703: Adhesive
- 704: Cut line
- 800: Paper product in accordance with the eighth embodiment
- 801: Cut line
- 900: Paper product in accordance with the ninth embodiment
- 903: Adhesive
- 904: Cut line
- 1000: Paper product in accordance with the tenth embodiment
- 1001: Main body
- 1002: Cover
- 1004: Adhesive tape
- 1005a, 1005b: Cut line
- 1100: Paper product in accordance with a variant of the tenth embodiment
- 1006a, 1006b: Separation line
- 1007: Separation band
- 1008a, 1008b: Cut line

### BEST MODE FOR PUTTING THE INVENTION INTO PRACTICE

### [First Embodiment]

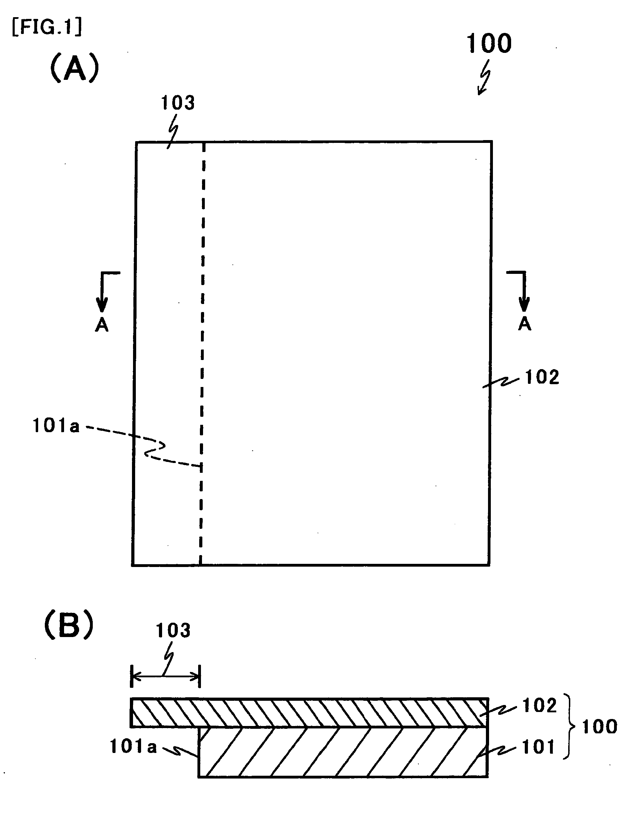

FIG. 1(A) is a plan view of a paper product 100 in accordance with the first embodiment of the present invention, and FIG. 1(B) is a cross-sectional view taken along the line A-A in FIG. 1(A).

The paper product 100 in accordance with the first embodiment comprises a rectangular substrate layer 101, and a rectangular material layer 102 formed on the substrate layer 101. The paper product 100 is formed as a single rectangular paper.

The substrate layer 101 is made of a paper. For instance, the substrate layer 101 is made of a woodfree paper.

The material layer 102 may be formed, for instance, by coating a chemical onto a surface of the substrate layer 101, and curing or drying the chemical. As an alternative, the material layer 102 may be formed by joining another layer to the substrate layer 101, in which case, the material layer 102 is different in characteristics from the substrate layer 101, and thus, the paper product 100 is called a compound paper in its entirety.

The material layer 102 may be formed by coating glaze (chemical) onto the substrate layer 101 by the thickness of 0.2 to 0.8 micrometers. By coating glaze, the paper product 100 is polished and comprises a coated paper, in which case, the paper product 100 is generally called an art paper or a gross paper.

As an alternative, the paper product 100 may be formed watermarking a plurality of material layers, in which case, the paper product 100 is called a watermarked board or a high basic-weight board.

The material layer 102 is ply-separatable from the substrate layer 101. Specifically, the material layer 102 can be peeled off the substrate layer 101. After the material layer 102 has been once separated from or peeled off the substrate layer 101, it is not possible to join the material layer 102 to the substrate layer 101 again.

As illustrated in FIGs. 1(A) and 1(B), the material layer 102 has an extending area 103 which extends outwardly beyond the substrate layer 101 when viewed from above.

The extending area 103 has a constant width along a longer edge 101a of the substrate layer 101, and is in the form of a rectangle.

In the paper product 100 in accordance with the first embodiment, the material layer 102 is separated from or peeled off the substrate layer 101 by pulling the extending area 103 in a direction in which the substrate layer 101 and the material layer 102 are separated from each other.

As explained above, the paper product 100 in accordance with the first embodiment makes it possible to separate the material layer 102 as a surface layer of the paper product 100 by virtue of the ply-separation characteristic inherent to a paper. Accordingly, it is no longer necessary to form an adhesive layer or a resin film layer on the substrate layer 101 unlike a conventional paper product, avoiding high costs and long-time steps for fabrication.

In accordance with the paper product 100, not only a surface of the material layer 102, but also a surface of the substrate layer 101 can be seen by a user. Hence, it is possible to print a desired pattern onto both surfaces of the material layer 102 and the substrate layer 101, ensuring an increase in an area for printing.

In the first embodiment, a shape of the extending area 103 is not to be limited to a shape illustrated in FIGs. 1(A) and 1(B). The extending area 103 may have an arbitrary shape, as long as it extends outwardly beyond the substrate layer 101.

### [Second Embodiment]

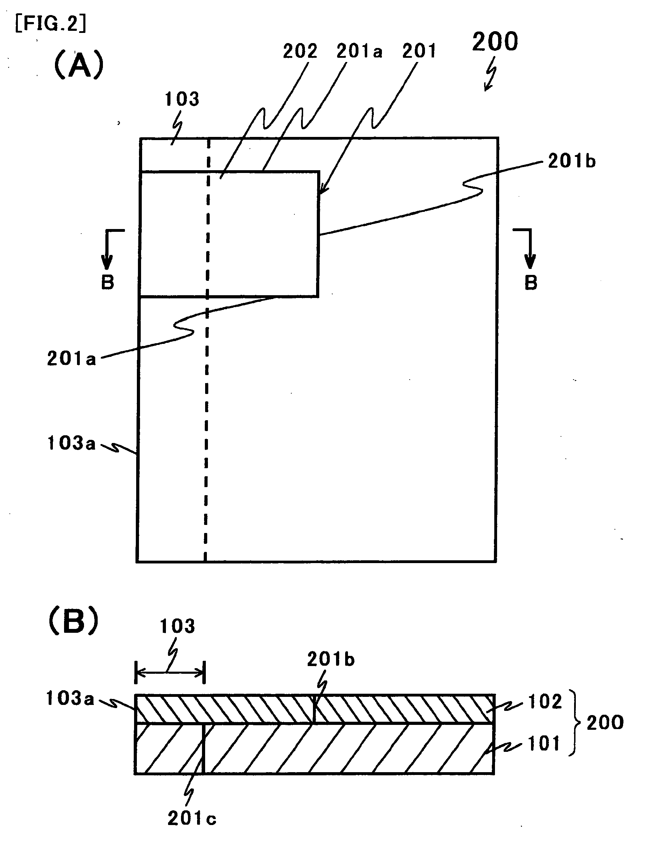

FIG. 2(A) is a plan view of a paper product 200 in accordance with the second embodiment of the present invention, and FIG. 2(B) is a cross-sectional view taken along the line B-B in FIG. 2(A).

The paper product 200 in accordance with the second embodiment is structurally different from the paper product 100 in accordance with the first embodiment in additionally having cut lines 201 and 201c.

As illustrated in FIG. 2(A), the cut line 201 is comprised of a pair of horizontal cut lines 201a horizontally extending in parallel from an outer edge 103a of the extending area 103, and a vertical cut line 201b joining ends of the horizontal cut lines 201a to each other. As illustrated in FIG. 2(B), the cut line 201 is formed throughout an entire thickness (an entire length in a thickness-wide direction) of the material layer 102.

A closed area surrounded by the outer edge 103a of the extending area 103, the pair of horizontal cut lines 201a, and the vertical cut line 201b defines a cut-out area 202. The material layer 102 is separated from or peeled off the substrate layer 101 only in the cut-out area 202.

The cut line 201c is formed throughout the substrate layer 101. The extending area 103 can be formed by separating the substrate layer 101 along the cut line 201c. It should be noted that it is not always necessary to separate the substrate layer 101 along the cut line 201c.

In accordance with the paper product 200, it is possible to arbitrarily define an area in which the material layer 102 is separated from or peeled off the substrate layer 101, through the cut line 201.

In the second embodiment, a position and a shape of the cut-out area 202 defined with the cut line 201 are not to be limited to a position and a shape illustrated in FIGs. 2(A) and 2(B). A position and a shape of the cut-out area 202 may be arbitrarily selected.

### [Third Embodiment]

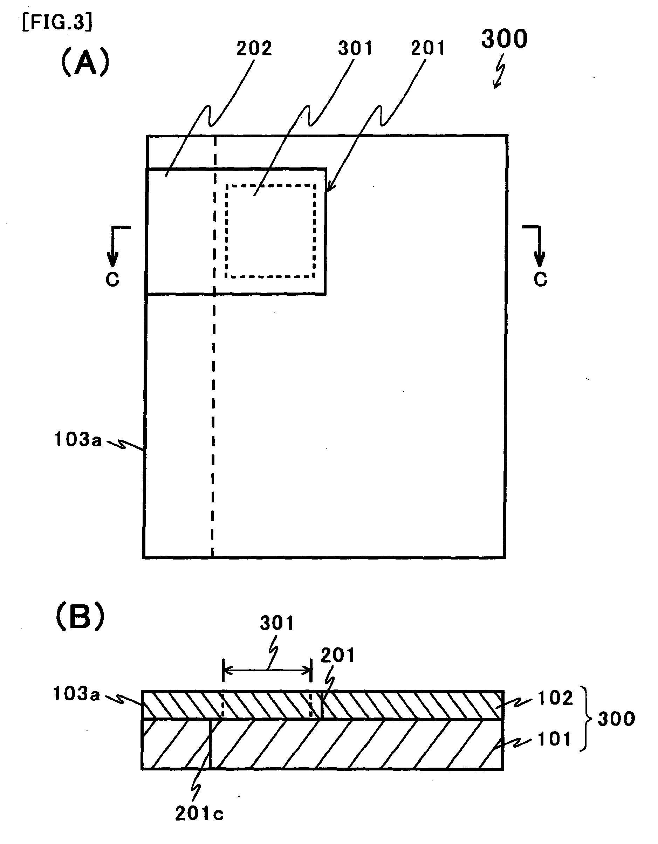

FIG. 3(A) is a plan view of a paper product 300 in accordance with the third embodiment of the present invention, and FIG. 3(B) is a cross-sectional view taken along the line C-C in FIG. 3(A).

The paper product 300 in accordance with the third embodiment is structurally different from the paper product 200 in accordance with the second embodiment in additionally having a rectangular separation area 301.

The separation area 301 can be formed as follows, for instance.

For instance, if the material layer 102 is formed as a chemical layer by coating a chemical onto the substrate layer 101 and drying the chemical, the chemical is not coated in a predetermined area. When the chemical is dried, the predetermined area in which the chemical was not coated is formed as the separation area 301.

As an alternative, when the material layer 102 is joined to the substrate layer 101, the material layer 102 is not joined to the substrate layer 101 only in a predetermined area. The area in which the material layer 102 is not joined to the substrate layer 101 is formed as the separation area 301.

As illustrated in FIG. 3A, the separation area 301 is formed within the cut-out area 202 and on the substrate layer 101.

For instance, a desired pattern may be printed in the separation area 301. In accordance with the paper product 300, when the material layer 102 is separated from or peeled off the substrate layer 101 in the cut-out area 202, a pattern having been printed in the separation area 301 is seen by a user. Hence, the separation area 301 may be used as an advertisement area or an information area.

In the third embodiment, a position and a shape of the separation area 301 are not to be limited to a position and a shape illustrated in FIGs. 3(A) and 3(B). A position and a shape of the separation area 301 may be arbitrarily selected.

### [Fourth Embodiment]

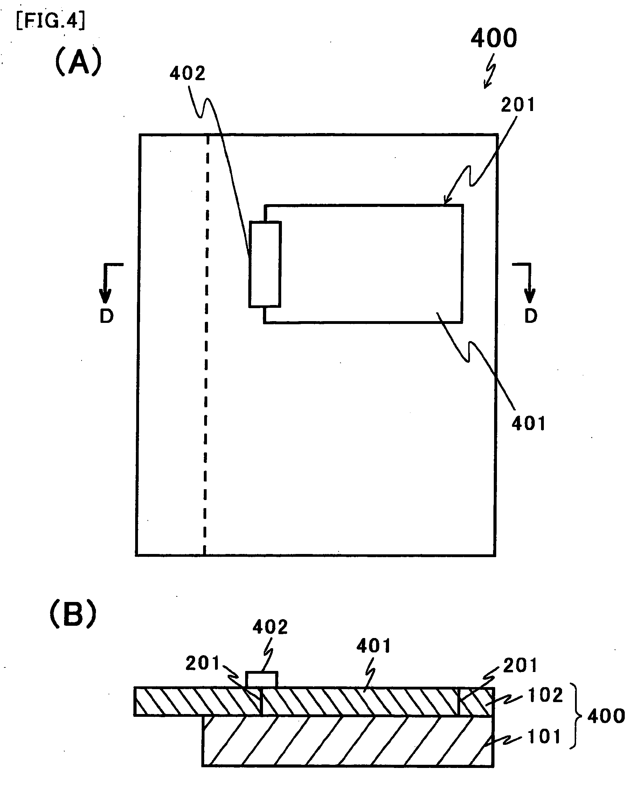

FIG. 4(A) is a plan view of a paper product 400 in accordance with the fourth embodiment of the present invention, and FIG. 4(B) is a cross-sectional view taken along the line D-D in FIG. 4(A).

The paper product 400 in accordance with the fourth embodiment is different from the paper product 300 in accordance with the third embodiment in a position of a cut-out area 401 defined with the cut line 201. Specifically, whereas the cut-out area 202 in the paper product 300 in accordance with the third embodiment includes the outer edge 103a of the extending area 103 as a side thereof, the cut-out area 401 in the paper product 400 in accordance with the fourth embodiment is remote from the outer edge 103a of the extending area 103, and is entirely disposed on the substrate layer 101.

The paper product 400 in accordance with the fourth embodiment further includes an adhesive seal 402 for separation.

The adhesive seal 402 is adhered onto the material layer 102 across inside and outside of the cut-out area 401. An adhesive force between the adhesive seal 402 and the material layer 102 is greater than an adhesive force between the substrate layer 101 and the material layer 102. Accordingly, when the adhesive seal 402 is peeled off, the cut-out area 401 is separated from or peeled off the substrate layer 101 with the cut-out area 401 remaining adhered to the adhesive seal 402.

Similarly to the separation area 301 in the third embodiment, a desired pattern may be printed in advance in the separation area 401. Namely, it is possible to use the separation area as an advertisement area or an information area.

In the fourth embodiment, a position and a shape of the separation area 401 are not to be limited to a position and a shape illustrated in FIGs. 4(A) and 4(B). A position and a shape of the separation area 401 may be arbitrarily selected.

### [Fifth Embodiment]

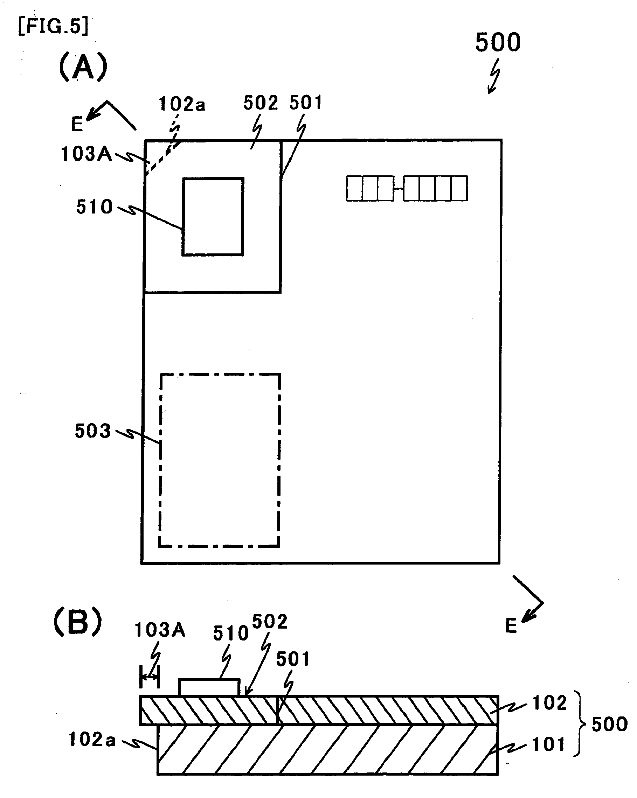

FIG. 5(A) is a plan view of a paper product 500 in accordance with the fifth embodiment of the present invention, and FIG. 5(B) is a cross-sectional view taken along the line E-E in FIG. 5(A).

The paper product 500 in accordance with the fifth embodiment is a variant of the paper product 200 in accordance with the second embodiment.

The paper product 500 in accordance with the fifth embodiment is formed as a postcard.

Similarly to the paper product 100 in accordance with the first embodiment, the paper product 500 in accordance with the fifth embodiment comprises a rectangular substrate layer 101, and a rectangular material layer 102 formed on the substrate layer 101. The paper product 500 is formed as a single rectangular paper.

The material layer 102 is ply-separatable from the substrate layer 101. Specifically, the material layer 102 can be separated from or peeled off the substrate layer 101. After the material layer 102 has been once separated from or peeled off the substrate layer 101, it is not possible to join the material layer 102 to the substrate layer 101 again.

As illustrated in FIG. 5(A), the substrate layer 101 is formed at a left and upper corner with a triangular cut-out 102a. The cut-out 102a defines in the material layer 102 an extending area 103A extending outwardly beyond the substrate layer 101.

The paper product 500 in accordance with the fifth embodiment is designed to have a L-shaped cut line 501 covering the left and upper corner. An area surrounded by the cut line 501 and an outer edge of the paper product 500 defines a separation area 502.

The separation area 502 includes the extending area 103A as a part thereof. Accordingly, the separation area 502 can be separated from or peeled off the substrate layer 101 by clamping the extending area 103A of the material layer 102 with fingers of a user.

As illustrated in FIG. 5(B), the cut line 501 is formed throughout an entire thickness (an entire length in a thickness-wise direction) of the material layer 102.

A stamp 510 is adhered onto the material layer 102 within the separation area 502.

The paper product 500 in accordance with the fifth embodiment makes it possible to, after receiving the paper product 500 as a postcard, take out the cancelled stamp 510 adhered to the material layer 102 in the separation area 502, by separating the separation area 502 defined with the cut line 501 from the substrate layer 101. Thus, in accordance with the paper product 500, it is possible to readily collect the cancelled stamp 510.

As illustrated in FIG. 5(A), a cut line 503 similar to the cut line 501 may be formed in a sender's column in the paper product 500 in accordance with the fifth embodiment. An address and a name of a sender are written in a sender's column. Hence, the formation of the cut line 503 makes it possible to separate a sender's column from the substrate layer 101, and to adhere the sender's column to an address list.

### [Sixth Embodiment]

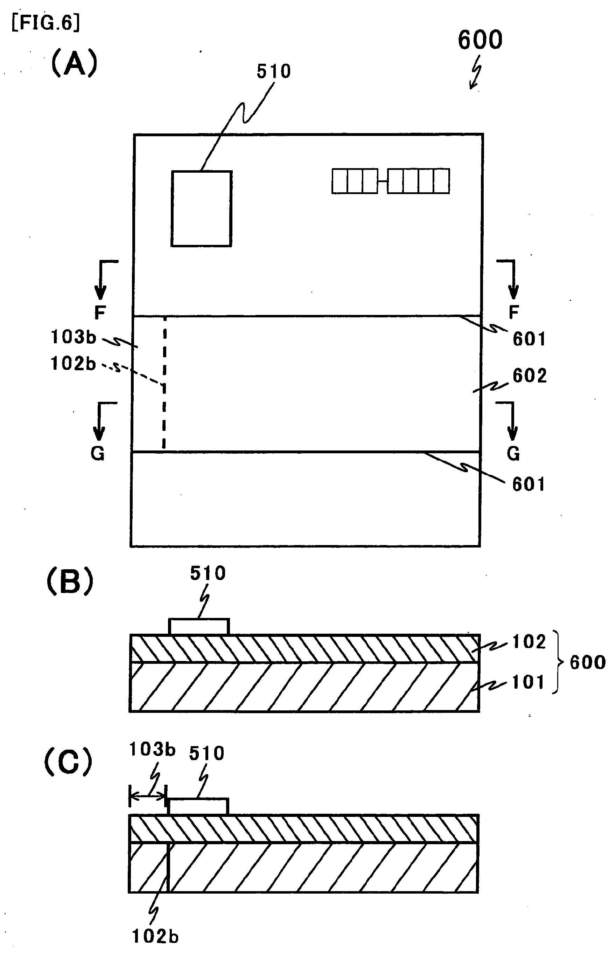

FIG. 6(A) is a plan view of a paper product 600 in accordance with the sixth embodiment of the present invention, FIG. 6(B) is a cross-sectional view taken along the line F-F in FIG. 6(A), and FIG. 6(C) is a cross-sectional view taken along the line G-G in FIG. 6(A).

Similarly to the paper product 500 in accordance with the fifth embodiment, the paper product 600 in accordance with the sixth embodiment is a variant of the paper product 200 in accordance with the second embodiment illustrated in FIG. 2.

The paper product 600 in accordance with the sixth embodiment is formed as a postcard.

Similarly to the paper product 100 in accordance with the first embodiment, the paper product 600 in accordance with the sixth embodiment comprises a rectangular substrate layer 101, and a rectangular material layer 102 formed on the substrate layer 101. The paper product 600 is formed as a single rectangular paper.

The material layer 102 is ply-separatable from the substrate layer 101. Specifically, the material layer 102 can be separated from or peeled off the substrate layer 101. After the material layer 102 has been once separated from or peeled off the substrate layer 101, it is not possible to join the material layer 102 to the substrate layer 101 again.

As illustrated in FIG. 6(C), a cut line 102b is formed throughout the substrate layer 101. By separating the substrate layer 101 along the cut line 102b, there is formed an extending area 103b. Specifically, as illustrated in FIG. 6(A), a rectangular cut-out 102b is formed at a left outer edge of the substrate layer 101, when the substrate layer 101 is cut along the cut line 102b. In association with the cut-out 102b, the material layer 102 has the extending area 103b outwardly extending beyond the substrate layer 101.

It is not always necessary to cut the substrate layer 101 along the cut line 102b.

A pair of cut lines 601 extending in parallel in a direction in which a shorter side of the paper product 600 extends is formed in the paper product 600 in accordance with the sixth embodiment. An area surrounded by the pair of cut lines 601 defines a separation area 602.

The separation area 602 includes the extending area 103b as a part thereof. Accordingly, the separation area 602 can be separated from or peeled off the substrate layer 101 by clamping the extending area 103b of the material layer 102 with fingers of a user.

Similarly to the cut line 501 in the fifth embodiment, each of the cut lines 601 is formed throughout an entire thickness (an entire length in a thickness-wise direction) of the material layer 102.

For instance, a desired pattern may be printed on the substrate layer 101 in the separation area 602. Thus, after receiving the paper product 600 as a postcard, the pattern printed on the substrate layer 101 appears by separating the separation area 602 defined with the cut lines 601 from the substrate layer 101. Hence, it is possible to use an area of the substrate layer 101 in alignment with the separation area 602 as an advertisement space or an information space.

### [Seventh Embodiment]

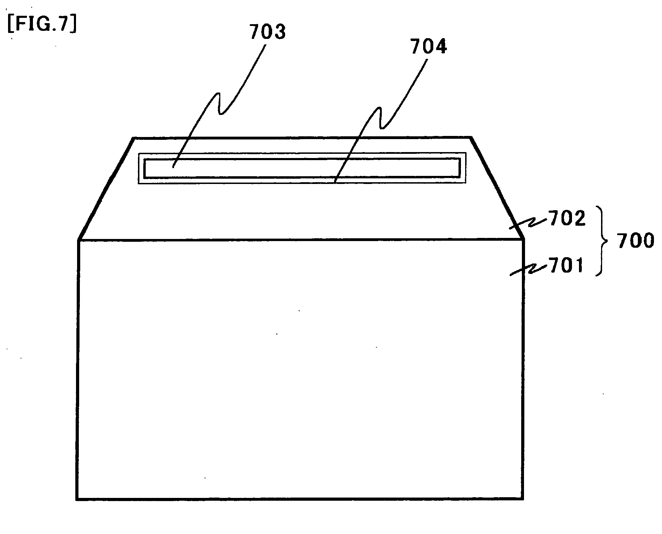

FIG. 7 is a plan view of a paper product 700 in accordance with the seventh embodiment of the present invention.

The paper product 700 in accordance with the seventh embodiment is a variant of the paper product 500 in accordance with the fifth embodiment.

The paper product 700 in accordance with the seventh embodiment is formed as an envelope.

Similarly to the paper products 100 to 600 in accordance with the first to sixth embodiments, the paper product 700 in accordance with the seventh embodiment comprises a substrate layer 101, and a rectangular material layer 102 formed on the substrate layer 101. The material layer 102 is ply-separatable from the substrate layer 101.

The paper product 700 in the form of an envelope comprises a main body 701 for enclosing a letter therein, and a cover 702 capable of opening and closing relative to the main body 701.

An adhesive 703 is coated on a rear surface of the cover 702 in a rectangular area. By bending the cover 702 towards the main body 701, and overlapping the cover 702 onto the main body 701, the cover 702 is adhered to the main body 701 through the adhesive 703. That is, the envelope is sealed.

In the paper product 700 in accordance with the seventh embodiment, a cut line 704 similar to the cut line 501 in the fifth embodiment is formed around a rectangular area in which the adhesive 703 is coated.

The paper product 700 in accordance with the seventh embodiment is used as follows.

When a user receives the paper product 700 as an envelope, the cover 702 is adhered to the main body 701 through the adhesive 703.

In a conventional envelope, the envelope is open by cutting the cover 702 at an arbitrary position. As a result, the envelope might be unsightly cut, or breakage of the envelope might extend to an unintentional area.

In contrast, since the paper product 700 in accordance with the seventh embodiment is designed to have the cut line 704 around the adhesive 703, the material layer 102 of the cover 702 is cut along the cut line 704 when the cover 702 adhered to the main body 701 is pulled from the main body 701, and resultingly, an area surrounded by the cut line 704 remains on the main body 701 with the area being adhered to the.adhesive 703.

Thus, the paper product 700 in accordance with the seventh embodiment makes it possible to open the envelope without unsightly breaking the cover 702. Furthermore, it is also possible to decently open the envelope, since the breakage of the envelope does not go beyond the cut line 704.

In addition, since the material layer 102 of the cover 702 surrounded by the cut line 704 is adhered to the adhesive 703 if the envelope is once open, it would be impossible to rejoin the cover 702 to the main body 701. Accordingly, a user is able to soon know that a person other than a legitimate recipient opened the envelope.

### [Eighth Embodiment]

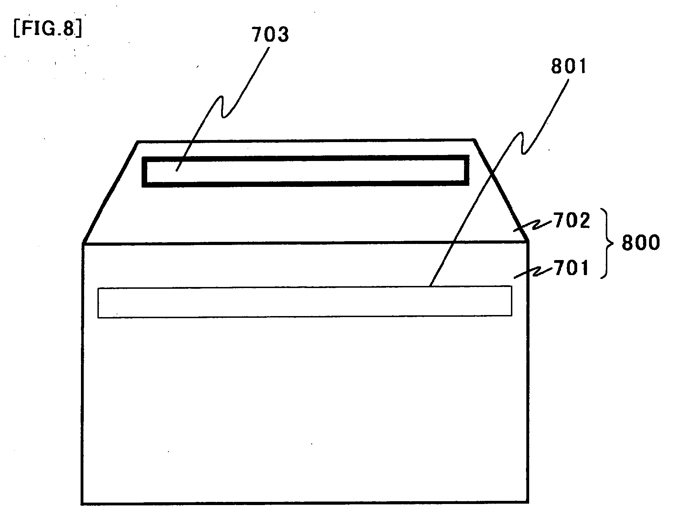

FIG. 8 is a plan view of a paper product 800 in accordance with the eighth embodiment of the present invention.

The paper product 800 in accordance with the eighth embodiment is a variant of the paper product 700 in accordance with the seventh embodiment.

The paper product 800 in accordance with the eighth embodiment is structurally different from the paper product 700 in accordance with the seventh embodiment with respect to a position of a cut line.

Whereas the cut line 704 is formed around the adhesive 703 in the paper product 700 in accordance with the seventh embodiment, a cut line 801 in the paper product 800 in accordance with the eighth embodiment is formed at the main body 701 in place of the cut line 704.

The cut line 801 is formed so as to position around the adhesive 703 when the cover 702 is adhered to the main body 701 through the adhesive 703.

In the paper product 800 in accordance with the eighth embodiment, since the cut line 801 is formed at the main body 701, when the cover 702 adhered to the main body 701 is pulled from the main body 701, the material layer 102 of the main body 701 is cut along the cut line 801, and an area surrounded by the cut line 801 remains adhered to the adhesive 703 and hence remains on the cover 702.

The paper product 800 in accordance with the eighth embodiment provides the same advantages as those provided by the paper product 700 in accordance with the seventh embodiment.

### [Ninth Embodiment]

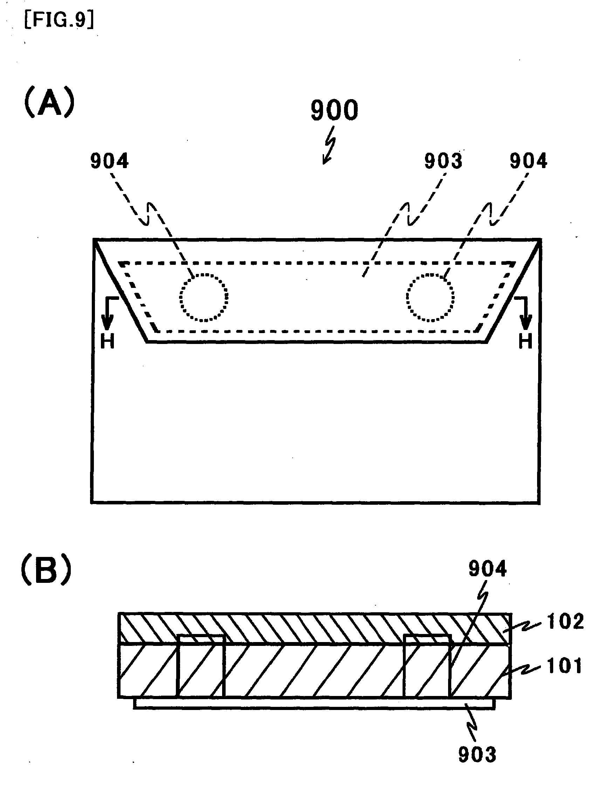

FIG. 9(A) is a plan view of a paper product 900 in accordance with the ninth embodiment of the present invention, and FIG. 9(B) is a cross-sectional view taken along the line H-H in FIG. 9(A).

The paper product 900 in accordance with the ninth embodiment is a variant of the paper product 700 in accordance with the seventh embodiment.

In the paper product 900 in accordance with the ninth embodiment, an adhesive 903 is coated in a predetermined area on the substrate layer 101 at a rear surface of the cover 702, and two circular cut lines 904 are formed in parallel in the area in which the adhesive 903 is coated.

The cut lines 904 in the ninth embodiment passes through the substrate layer 101 and reaches almost half of an entire thickness of the material layer 102 unlike the cut line 501 in the fifth embodiment.

In use of the paper product 900 in accordance with the ninth embodiment, the cover 702 is adhered to the main body 701 through the adhesive 903. If the paper product 900 is once open, that is, the cover 702 is once separated from or peeled off the main body 701, the material layer 102 is cut in an area of the material layer 102 in which the cut lines 904 do not reach. Accordingly, an area surrounded by the cut lines 904 remains adhered to the adhesive 903, and hence, remains on the main body 701.

Hence, it is readily known that the paper product 900 in accordance with the ninth embodiment has been once open. Even if a person other than a legitimate recipient opened the paper product 900, it would be possible to know soon.

A shape, a number and an arrangement of the cut lines 904 are not to be limited to those in the ninth embodiment. They may be arbitrarily determined. For instance, any shape of the cut lines 904 may be selected if they define a closed area. For instance, the cut lines 904 may be rectangular, elliptical, or star-shaped, as well as circular. Furthermore, a number of the cut lines 904 is not to be limited to two. One or three or more may be selected. An arrangement for a plurality of the cut lines 904 is not to be limited to the linear arrangement illustrated in FIG. 9. A matrix arrangement and other arrangements may be selected.

The cut lines 904 may be comprised of not only a solid line, but also a broken line.

### [Tenth Embodiment]

Though the above-mentioned seventh to ninth embodiments are applied to an envelope, the embodiments may be applied to anything but an envelope. The seventh to ninth embodiments may be applied to a box or a container. Specifically, the seventh to ninth embodiments may be applied to any container, if the container comprises a main body in which an object is contained, and a cover capable of opening and closing relative to the main body.

As an example, a box to which the sixth embodiment is applied is explained hereinbelow as the tenth embodiment.

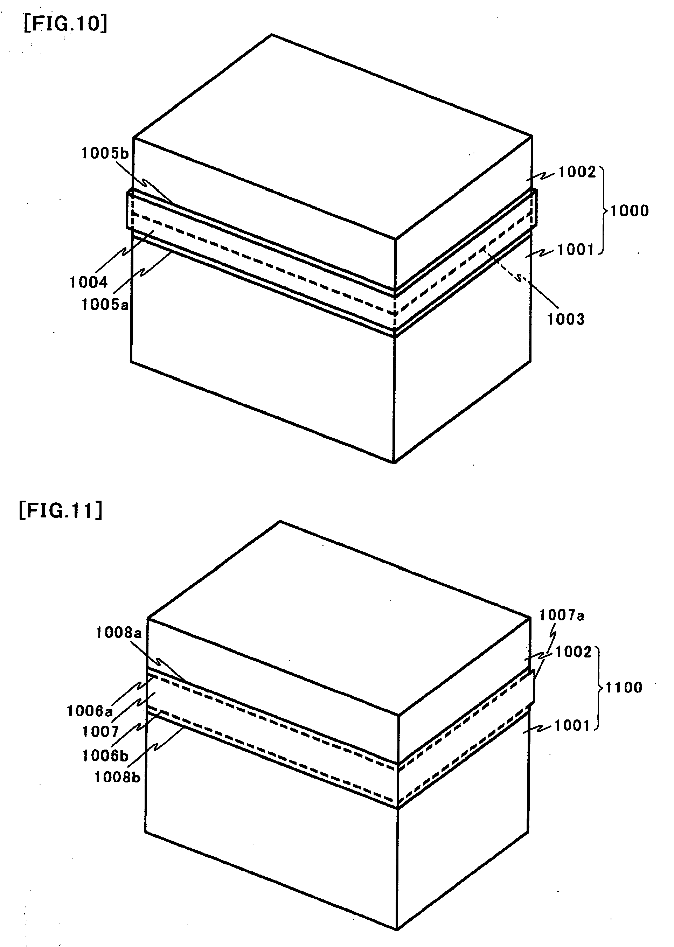

FIG. 10 is a perspective view of a paper product in accordance with the tenth embodiment of the present invention.

The paper product in accordance with the tenth embodiment is formed as a corrugated fiberboard box 1000. The corrugated fiberboard box 1000 is comprised of a main body 1001 in which an object is contained, and a cover 1002 capable of opening and closing relative to the main body 1001. The main body 1001 and the cover 1002 is continuous to each other through a boundary line 1003.

In use, an adhesive tape 1004 is adhered across the main body 1001 and the cover 1002 along the boundary line 1003 so as to prevent the main body 1001 and the cover 1002 from opening.

There are formed cut lines 1005a and 1005b (corresponding to the cut lines 601 in the sixth embodiment) in almost parallel with the adhesive tape 1004 at opposite sides of the adhesive tape 1004 with a predetermined space therebetween.

When the main body 1001 and the cover 1002 are made open to each other, the adhesive tape 1004 is peeled off both the main body 1001 and the cover 1002. In a conventional corrugated fiberboard box having no cut lines 1005a and 1005b, since the adhesive tape 1004 is adhered to a surface layer of the corrugated fiberboard box, the surface layer of the corrugated fiberboard box is broken as the adhesive tape 1004 is being peeled off. The breakage of the surface layer often extends to an unintentional area. For instance, assuming that a pattern is printed onto the main body 1001 in order to use the main body 1001 itself, the printed pattern would be broken, if the breakage of the surface layer often extends to an unintentional area, resulting in that value of the main body 1001 is much reduced.

In contrast, since the corrugated fiberboard box 1000 in accordance with the tenth embodiment is designed to have the cut lines 1005a and 1005b formed at opposite sides about the adhesive tape 1004, even if breakage occurs at a surface layer (corresponding to the material layer 102 in the sixth embodiment) as the adhesive tape 1004 is being separated, the breakage would stop at the cut lines 1005a and 1005b, and hence, would not go beyond the cut lines 1005a and 1005b. Accordingly, a pattern printed on the main body 1001 is not damaged, ensuring that the non-damaged main body 1001 is used

Though the corrugated fiberboard box 1000 in accordance with the tenth embodiment is designed to have the two cut lines 1005a and 1005b, it is not always necessary to form both of the cut lines 1005a and 1005b. If necessary, only one of the cut lines 1005a and 1005b may be formed.

In the tenth embodiment, the main body 1001 and the cover 1002 are designed to be separate from each other at the boundary line 1003. The main body 1001 and the cover 1002 may be designed to be joined each other, in which case, the main body 1001 and the cover 1002 are separated from each other by cutting the fiberboard box 1000 at the boundary line 1003.

FIG. 11 is a perspective view of a variant of the corrugated fiberboard box 1000 in accordance with a variant of the tenth embodiment.

A corrugated fiberboard box 1100 in accordance with the variant is comprised of a main body 1001 and a cover 1002, similarly to the corrugated fiberboard box 1000.

There is formed a pair of separation lines 1006a and 1006b extending in parallel with each other between the main body 1001 and the cover 1002. The main body 1001 and the cover 1002 are separated from each other by breaking a paper (corresponding to the substrate layer 101 and the material layer 102 in the sixth embodiment) of which the corrugated fiberboard box 1100 is made, along the pair of separation lines 1006a and 1006b.

A separation band 1007 defined as an area sandwiched between the pair of separation lines 1006a and 1006b is formed at an end thereof with a tab 1007a. It is possible to break a paper of which the corrugated fiberboard box 1100 is made, along the pair of separation lines 1006a and 1006b, by pulling the separation band 1007 through the tab 1007a.

When the main body 1001 and the cover 1002 are to be separated from each other by means of the separation band 1007, the breakage originated from the pair of separation lines 1006a and 1006b may unintentionally extend.

The corrugated fiberboard box 1100 in accordance with the variant is designed to have a pair of cut lines 1008a and 1008b extending in parallel with and outside of the pair of separation lines 1006a and 1006b.

Hence, even if the breakage occurs at a surface layer (corresponding to the material layer 102 in the sixth embodiment) of the corrugated fiberboard box 1100 as a paper of which the corrugated fiberboard box 1100 is made is being cut by means of the separation band 1007, the breakage would stop at the cut lines 1008a and 1008b, and hence, would not go beyond the cut lines 1008a and 1008b. Accordingly, a pattern printed on the main body 1001 is not damaged, ensuring that the non-damaged main body 1001 is used

Though the corrugated fiberboard box 1100 in accordance with the variant is designed to have the two cut lines 1008a and 1008b, it is not always necessary to form both of the cut lines 1008a and 1008b. If necessary, only one of the cut lines 1008a and 1008b may be formed.

Though the tenth embodiment is applied to a corrugate fiberboard box, the tenth embodiment may be applied to an envelope similarly to the above-mentioned embodiments.

### INDUSTRIAL APPLICABILITY

The paper product in accordance with the present invention, having a function of separating a surface layer of a paper, is applicable to a postcard and an envelope both as having been exemplified in the embodiments, numbering of DM catalogues, a lot number seal for paper containers, and a seal for collecting cancelled stamps, for instance.

Furthermore, the paper product may be designed to include an area (the separation area 301 in the embodiments) in which a substrate layer and a material layer are not joined to each other, in which case, by printing a pattern in the area when the paper product is fabricated, the pattern can be displayed to a user when the area appears. That is, it is possible to use the area as an advertisement space or an information space. By applying the present invention to a postcard, for instance, the postcard can be used as an advertisement tool such as a direct mail.

The present invention can be applied not only to a top or rear surface of a paper product, but also to top and rear surfaces of a paper product.

## Claims

1. A paper product made of a single paper comprising a substrate layer, and a material layer formed on said substrate layer,
wherein said material layer is ply-separatable from said substrate layer, and
said material layer has an extending area which extends outwardly beyond said substrate layer when viewed from above.

2. A paper product made of a single paper comprising a substrate layer, and a material layer formed on said substrate layer,
wherein said material layer is ply-separatable from said substrate layer,
said material layer has an extending area which extends outwardly beyond said substrate layer when viewed from above,
said material layer has a cut line formed throughout an entire thickness thereof, and
a closed area defined by said cut line is separated by ply-separation.

3. The paper product as set forth in claim 2, wherein said closed area defined by said cut line includes at least a part of an outer edge of said extending area.

4. The paper product as set forth in claim 2, wherein said closed area defined by said cut line is formed on said substrate layer.

5. The paper product as set forth in claim 4, further comprising a seal adhered across inside and outside of said closed area defined by said cut line,
wherein an adhesive force between said seal and said material layer is greater than an adhesive force between said substrate layer and said material layer.

6. The paper product as set forth in any one of claims 2 to 5, wherein a separation area in which said substrate layer and said material layer are ply-separated from each other is formed in said closed area defined by said cut line.

7. The paper product as set forth in any one of claims 1 to 6, wherein said paper product comprises a postcard.

8. A container comprising a main body in which an object is contained, and a cover capable of opening and closing relative to said main body,
wherein said container is made of a single paper comprising a substrate layer, and a material layer formed on said substrate layer,
said material layer is ply-separatable from said substrate layer,
an adhesive is coated on said cover for adhering said main body and said cover to each other,
a cut line is formed throughout an entire thickness of said material layer in an area around an area in which said adhesive is coated, and
when said cover is peeled off said main body, an area defined by said cut line is ply-separated.

9. A container comprising a main body in which an object is contained, and a cover capable of opening and closing relative to said main body,
wherein said container is made of a single paper comprising a substrate layer, and a material layer formed on said substrate layer,
said material layer is ply-separatable from said substrate layer,
an adhesive is coated on said cover on said substrate layer for adhering said main body and said cover to each other,
a cut line is formed in said cover throughout both an entire thickness of said material layer and a part of a thickness of said substrate layer in an area in which said adhesive is coated, and
when said cover is peeled off said main body, an area defined by said cut line is ply-separated.

10. The container as set forth in claim 8 or 9, wherein said container is in the form of an envelope.

11. A container comprising a main body in which an object is contained, and a cover capable of opening and closing relative to said main body, and composed of a material which can be cut,
wherein said container is made of a single paper comprising a substrate layer, and a material layer formed on said substrate layer,
said material layer is ply-separatable from said substrate layer, and
a cut line is formed adjacent to and along a boundary line between said main body and said cover, said cut line being formed throughout an entire thickness of said material layer.

12. The container as set forth in claim 11, wherein said cut line is formed at opposite sides about said boundary line.

13. A container comprising a main body in which an object is contained, and a cover capable of opening and closing relative to said main body, and composed of a material which can be cut,
wherein said container is made of a single paper comprising a substrate layer, and a material layer formed on said substrate layer,
said material layer is ply-separatable from said substrate layer,
said container includes a pair of separation lines parallel to each other for cutting said container along a desired line, and a cut line formed outside of at least one of said separation lines along and in adjacent to said separation lines, and
said cut line is formed throughout an entire thickness of said material layer.
